Europäisches Patentamt

European Patent Office

Office européen des brevets

(19)

(11) Publication number: **0 125 225**

**A1**

(12) # EUROPEAN PATENT APPLICATION

(21) Application number: **84850141.7**

(22) Date of filing: **02.05.84**

(51) Int. Cl.³: **C 01 F 11/46**

(30) Priority: **06.05.83 SE 8302592**

(43) Date of publication of application:
**14.11.84 Bulletin 84/46**

(84) Designated Contracting States:
**AT BE CH DE FR GB IT LI LU NL SE**

(71) Applicant: **Boliden Aktiebolag**
**Box 5508**
**S-114 85 Stockholm(SE)**

(72) Inventor: **Kullenberg, Nils Eric Ferdinand**
**Jonstorpsvägen 96**
**S-263 00 Höganäs(SE)**

(72) Inventor: **Persson, Lars-Erik Herbert**
**Alegatan 26**
**S-252 60 Helsingborg(SE)**

(74) Representative: **Inger, Lars Ulf Bosson et al,**
**Boliden AB Patent & Trade Marks Box 5508**
**S-114 85 Stockholm(SE)**

(54) A method for producing fibrous gypsum (III).

(57) The present invention relates to a novel acicular calcium sulphate crystal comprising calcium sulphate-anhydrite and calcium sulphate-dihydrate, and to a method for its manufacture. The gypsum is dissolved to saturation in a sulphuric acid solution containing at least 35% $H_2SO_4$ at elevated temperature, whereafter the solution is allowed to stand under agitation, and to cool to ambient temperature while crystallizing out the aforementioned acicular calcium sulphate crystals.

EP 0 125 225 A1

# A METHOD FOR PRODUCING FIBROUS GYPSUM (III)

## Description

### Technical field

The present invention relates to a novel acicular gypsum crystal, and to a method for producing gypsum in the form of acicular crystals, so-called fibrous gypsum, having a length which exceeds their thickness by 10-1000 times, by dissolving and transforming calcium sulphate ($CaSO_4 \cdot \frac{1}{2}H_2O$, $CaSO_4 \cdot 2H_2O$).

The object of the present invention is to provide a possibility of producing acicular gypsum crystals which contain calcium sulphate in anhydrite form and calcium sulphate in dihydrate form, which gypsum crystals are suitable for admixture with cellulose-fibre materials, building materials, asbestos-fibre substitutes, etc.

### Background art

Gypsum has been the subject of research and development for a great many years, and many attempts have been made to find a use therefor within various fields; in this respect, attempts have also been made to find a use for the large amounts of gypsum precipitates obtained in different processes, and particularly those obtained when producing phosphoric acid in accordance with the wet process. Gypsum is also formed in other chemical processes, within the so-called heavy chemical unorganic industry. Because present day gypsum precipitates contain undesirable substances, they cannot be dumped freely into the sea, but must first be limed and then dumped on land, therewith incurring heavy handling costs.

Gypsum is today used by the building-material industries, and is mixed with cement or used to produce gypsum panels and sheeting used as building material in the construction of buildings, and in particular in the construction of internal walls.

It has also been proposed to admix gypsum with cellulose fibres, in order to reduce the need for raw wood-materials in the paper and board manufacturing industries.

When manufacturing building board, and also when admixing gypsum with cellulose fibres, it is desirable to have the gypsum in fibre form, i.e. in the form of acicular crystals, in order to thereby improve its manageability and mechanical strength.

Various methods have been proposed for producing so-called fibrous gypsum. For example, there is described in DE-A1-28 54 722 a method for producing calcium-sulphate-$\alpha$-hemihydrate, from, <u>inter alia</u>, calcium-sulphate-dihydrate, calcium-sulphate-$\beta$-hemihydrate or calcium sulphate-anhydrite, in which an aqueous slurry of such starting material is subjected to a hydrothermal reaction, to form acicular and/or particulate gypsum crystals. To this end, there is added to the slurry a powderous inorganic substance, such as talc, silica, calcium carbonate, calcium sulphate-anhydrite in solution, or calcium sulphate-hemihydrate. The resultant fibrous calcium sulphate-$\alpha$-hemihydrate can be converted to anhydrite form by calcination, the resultant acicular crystals being re-formed to particulate gypsum.

The reaction as such can be carried out in autoclave, by heating an aqueous slurry to 100-180°C for 1-90 minutes, normally 120-135°C for 5-10 minutes.

The described method is heat consuming and is unable to provide a pure product which does not incorporate silica, talc, clay, etc.

In DE-A1-26 13 651; DE-A1-26 59 860; and DE-A1-26 59 861 there are described methods for producing fibrous gypsum in the form of $\alpha$-hemihydrate gypsum or anhydrite gypsum starting from calcium sulphite which is oxidized to calcium sulphate-hemihydrate at elevated temperatures and pressure and over considerable lengths of time (130°C; 2 kp/cm$^2$; 1 hour). Calcination at 200-800°C provides anhydrite fibrous gypsum. This method is also energy consuming and demanding on the apparatus used.

All of the aforecited methods are relatively complicated, and none enables a pure gypsum product of fibrous gypsum having mixed water-of-crystallization contents to be produced.

**Disclosure of the present invention**

It has now surprisingly been found possible to produce a fibrous gypsum with a mixed water-of-crystallization content in accordance with the present invention in a simple and rational manner. The invention is characterized by dissolving calcium sulphate, hemihydrate or dihydrate, in a sulphuric-acid solution containing at least 35% $H_2SO_4$, to saturation at an elevated temperature of 70-100°C; permitting the resultant clear, saturated solution to cool to ambient temperature under agitation, thereby to crystallize out fibrous gypsum containing 50-65% calcium sulphate-anhydrite and 35-50% calcium sulphate-dihydrate.

It was found that the resultant fibre had a composite crystalline structure comprising normally about 50% anhydrite gypsum and about 50% dihydrate gypsum. No hemi(semi)hydrate gypsum was present. The resultant fibre was, for the most, also extremely long in relation to its thickness (100-1000 times).

The gypsum used to produce fibrous gypsum may be gypsum obtained from the manufacture of phosphoric acid in accordance with the wet method, or gypsum obtained from flue-gas purifying plants, or, when a highly pure product is desired, from pure, natural gypsum.

Gypsum obtained from phosphoric-acid manufacturing processes often contains solid contaminants deriving from the apatite or the phosphate used. These contaminants can be readily removed when the gypsum is dissolved.

The invention will now be described in more detail with reference to the following examples.

**Example 1**

Sulphuric acid solutions containing 39, 63 and 70% $H_2SO_4$ were saturated with $\alpha$-hemihydrate gypsum at 85°C. Undissolved gypsum was filtered off and the clear solution was allowed to cool to room temperature under slight agitation, thereby to crystallize out gypsum. The gypsum precipitate was separated from the solution after 16 hours, and analyzed.

## Result

| Test | $H_2SO_4$-konc. % | The amount gypsum obtained | Anhydrite % | Dihydrate % | Crystal structure |
|---|---|---|---|---|---|
| 1 | 39 | 2.7 | 58 | 42 | Fibrous gypsum |
| 2 | 63 | 0.5 | 100 | – | Particulate |
| 3 | 70 | – | No crystals | | |

## Example 2

A sulphuric acid solution containing 39% $H_2SO_4$ was saturated with α-hemi-gypsum at 85°C. Undissolved gypsum was filtered off and the clear filtrate was allowed to cool to room temperature while being slightly agitated, thereby to crystallize out gypsum. The sample analyses took 4, 7, 12, 24 and 48 hours respectively.

## Result

| Time | Anhydrite % | Dihydrate % | Crystal structure |
|---|---|---|---|
| 4 | 63 | 37 | Fibrous gypsum |
| 7 | 60 | 40 | Fibrous gypsum |
| 12 | 58 | 42 | Fibrous gypsum |
| 24 | 59 | 41 | Fibrous gypsum |
| 48 | 61 | 39 | Fibrous gypsum |

The fibre length was >100/um, the thickness was 1-2/um and the width 3-4/um.

In other tests the fibrous gypsum obtained had a length of 10-1000/um and a width-thickness of 1-3/um. The length of the crystal is preferably 100-200/um and the width-thickness 1-3/um.

The fibre produced in accordance with the aforegoing is normally extremely long and enables a self-binding material to be produced. Thus, the fibre is well suited for use in the manufacture of insulating material, such as building material, furnace insulating material etc. Furthermore, paper containing very high percentage of fibrous gypsum can be produced. Products produced in a sheet former exhibit the same binding properties as cellulose fibres. Cellulose fibres can be admixed with the fibrous-gypsum product, in order to obtain satisfactory tear strength. Tests in which products contained 60 and 80% gypsum (40 and 20% cellulose) provided satisfactory surface-glazed sheet material. Such paper is lighter in weight than paper containing natural gypsum.

## CLAIMS

1.    Acicular calcium sulphate crystal comprising calcium sulphate-anhydrite and calcium sulphate-dihydrate.

2.    Acicular calcium sulphate crystal according to claim 1, characterized in that it contains 50-65% by weight calcium sulphate-anhydrite, and 35-50% by weight calcium sulphate-dihydrate.

3.    Acicular calcium sulphate crystal according to claims 1-2, characterized in that said crystal has a length which is 50-200 times its width-thickness.

4.    A method for producing calcium sulphate crystals, in which each crystal contains calcium sulphate-anhydrite and calcium sulphate-dihydrate, characterized by dissolving calcium sulphate-hemihydrate and/or dihydrate, to saturation in a sulphuric-acid solution containing at least 35% $H_2SO_4$ at an elevated temperature of 70-100°C; permitting the resultant saturated, clear solution to stand under agitation and to cool to ambient temperature while crystallizing acicular calcium sulphate crystals comprising calcium sulphate-anhydrite and calcium sulphate-dihydrate.

5.    A method according to claim 4, characterized in that the sulphuric acid-concentration is 35-55%.

6.    A method according to claim 5, characterized in that the sulphuric-acid concentration is 38-45%.

7.    A method according to claim 4, characterized in that the temperature of the solution when dissolving the gypsum is 85-100°C.

8.    The use of acicular calcium sulphate crystals comprising calcium sulphate-anhydrite and calcium sulphate-dihydrate in the manufacture of sheet material.

**0125225**

Application number

EP 84 85 0141.7

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 849 313 (CERTAIN-TEED CORP.) | | C 01 F 11/46 |
| X | EP-A-0 012 488 (STAMICARBON) *Claims* | 4 | |
| X | EP-A-0 012 487 (STAMICARBON) *Claims* | 4 | |
| X | EP-A-0 076 551 (UNIE VAN KUNSTMEST-FABRIEKEN B.V.) *Claims* | 4 | |
| X | GB-B-848 617 (NATIONAL LEAD COMPANY) *Claims* | 4 | |

| TECHNICAL FIELDS SEARCHED (Int. Cl. ³) |
|---|
| C 01 F<br>C 04 B<br>C 09 C<br>D 01 F |

The present search report has been drawn up for all claims

| Place of search | Date of completion of the search | Examiner |
|---|---|---|
| STOCKHOLM | 04-07-1984 | LUNDELL B-M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82